Europäisches Patentamt

European Patent Office

Office européen des brevets

(11) Veröffentlichungsnummer: **0 385 222**
**A1**

## (12) EUROPÄISCHE PATENTANMELDUNG

(21) Anmeldenummer: **90103171.6**

(51) Int. Cl.⁵: **B60J 10/12, B60J 7/22**

(22) Anmeldetag: **19.02.90**

(30) Priorität: **02.03.89 DE 3906685**

(43) Veröffentlichungstag der Anmeldung:
**05.09.90 Patentblatt 90/36**

(84) Benannte Vertragsstaaten:
**DE ES FR GB IT**

(71) Anmelder: **METZELER Gesellschaft mit
beschränkter Haftung
Gneisenaustrasse 15**

**D-8000 München 50(DE)**

(72) Erfinder: **Körber, Hans
Eichendorffstrasse 10
D-7994 Langenargen(DE)**

(74) Vertreter: **Michelis, Theodor, Dipl.-Ing.
Gneisenaustrasse 15
D-8000 München 50(DE)**

(54) **Dichtungsprofil mit Windabweiser für das Schiebedach eines Kraftfahrzeuges.**

(57) Bei einem Dichtungsprofil mit Windabweiser für das Schiebedach eines Kraftfahrzeuges ist zur einfacheren Herstellung und Montage erfindungsgemäß vorgesehen, daß das Dichtungsprofil über den gesamten Umfang einstückig ausgebildet ist und im Bereich der vorderen Dachöffnungskante einen anextrudierten, sich bei Öffnen des Schiebedaches selbsttätig aufstellenden Windabweiser (3) aufweist.

FIG.3

## Dichtungsprofil mit Windabweiser für das Schiebedach eines Kraftfahrzeuges

Die Erfindung bezieht sich auf ein Dichtungsprofil mit Windabweiser für das Schiebedach eines Kraftfahrzeuges, bei dem die Dichtung die das Schiebedach umgebende Dachöffnungskante umzieht.

Bei der Abdichtung des Spaltes zwischen einem Schiebedach und dem umgebenden Dachausschnitt war es bisher üblich, für die verschiedenen Seiten des Dachausschnittes Dichtungsabschnitte mit unterschiedlichem Querschnitt aneinanderzuheizen, wobei ein Windabweiser an der Vorderkante des Schiebedachs bzw. des Dachausschnittes meist gesondert angesetzt und über ein Scharniersystem beim Zufahren des Schiebedaches eingeklappt wurde.

Der vorliegenden Erfindung liegt demgegenüber die Aufgabe zugrunde, ein Dichtungsprofil mit einem Windabweiser zu schaffen, das sehr viel einfacher herzustellen ist und ohne gesonderte bewegliche Teile oder Scharniere ein Aufstellen bzw. Schließen des Windabweisers sicherstellt.

Zur Lösung dieser Aufgabe ist erfindungsgemäß vorgesehen, daß das Dichtungsprofil über den gesamten Umfang einstückig ausgebildet ist und im Bereich der vorderen Dachöffnungskante einen anextrudierten, beim Öffnen des Schiebedaches aufstellenden Windabweiser aufweist.

Mit einem derartigen Dichtungsprofil kann also einstückig der Spalt zwischen Schiebedach und Dachöffnung abgedichtet werden, wobei der Windabweiser ein integraler Bestandteil des Profils ist.

Zur speziellen Ausgestaltung des Dichtungsprofils ist es besonders von Vorteil, wenn das Dichtungsprofil ein U-förmiges, nach oben offenes Klemmprofil aus härterem Material aufweist, an dessen innenliegendem Schenkelende über einen weichelastischen, flexiblem Zwischenabschnitt das aus härterem Material bestehende, ebene und schräg nach oben abragende Windabweiserprofil angeschlossen ist, dessen innenliegendes Ende über die Anschlußstelle des flexiblen Zwischenabschnittes hinaus nach unten verlängert ist und auf seiner freien Innenseite einen schlauchförmigen Profilaufsatz aus weicherem Material als Dicht-und Anschlagfläche gegen die vordere Schiebedachkante derart aufweist, daß bei Schließen des Schiebedachs das abragende Windabweiserprofil um die Anschlußstelle des Zwischenabschnitts als Drehpunkt verschwenkt und nach unten geklappt ist.

Zum Aufstellen des Windabweisers können mechanisch-elastische Hilfsmittel oder eine pneumatische Unterstützung herangezogen werden.

Dabei kann zwischen der Außenkante des Schlauchprofils und dem Fußbereich des Klemmprofils ein weiterer, bogenförmiger Profilabschnitt aus weicherem Material verlaufen.

Es ist aber auch möglich, zwischen dem innenliegenden Ende des Windabweiserprofils und dem benachbarten Schenkel des Klemmprofils ein V-förmiges, nach unten offenes Fe derstahlband einzuknöpfen.

Für eine pneumatische Unterstützung ist zweckmäßigerweise das innenliegende Ende des Windabweiserprofils über einen flexiblen Steg mit dem innenliegenden Schenkel des Klemmprofils verbunden und zwischen der Unterseite dieses innenliegenden Endes und einem seitlichen Ansatz des Fußes des Klemmprofils ein angenähert schlauchförmiger, weichelastischer Profilabschnitt einvulkanisiert, wobei die so gebildete Kammer über eine Bohrung in dem Ansatz an eine pneumatische Druck- und Saugquelle angeschlossen ist.

Zur besseren Hebelwirkung ist es ferner zweckmäßig, wenn das innenliegende Ende des Windabweiserprofils gegenüber dem frei abragenden Profilbereich unter einem Winkel von etwa 30° abgeknickt ist.

Für den seitlichen und hinteren Dichtbereich der Dachöffnung kann dann von dem mit dem Windabweiser extrudierten Profil das abragende Windabweiserprofil bis auf den Bereich des Drehpunktes zurückgeschnitten werden.

Zweckmäßigerweise verläuft dabei die seitliche Kante des zurückgeschnittenen Windabweiserprofilbereichs schräg im Winkel zur Profillängsachse.

Zur besseren Halterung des abklappbaren Dichtungsbereiches ist es zweckmäßig, wenn im seitlichen und hinteren Dichtbereich das innenliegende Ende des Windabweiserprofils an dem benachbarten Schenkel des Klemmprofils anliegt und starr mit diesem verbunden ist.

Diese Verbindung kann dabei durch ein doppelseitiges Klebeband oder mittels eines in eine seitliche, nutförmige Ausnehmung des Klemmprofilfußes einknüpfbaren Ansatzes am innenliegenden Windabweiserprofilende erfolgen.

Zur Abdichtung gegen das geschlossene Schiebedach ist es ferner zweckmäßig, wenn das Windabweiserprofil am vorderen freien Ende eine nach unten ragende Dichtnase aus weicherem Material aufweist.

Für alle Profilbereiche gilt, daß zweckmäßigerweise der härtere Materialbereich eine Shore-A-Härte von etwa 90 und die weicheren Materialbereiche eine Shore-A-Härte von etwa 45 bis 55 aufweisen.

Zur seitlichen Abdichtung des zurückgeschnittenen Windabweiserprofils ist es ferner zweckmäßig, wenn an den seitlichen Kanten zusätzliche Dichtungsnasen angeheizt sind.

Schließlich kann die Oberseite des Windabweiserprofils mit einer eingefärbten Formmischung überdeckt sein.

Statt dieser einstückig extrudierten Ausgestaltung ist es aber auch möglich, seitlich an den Bereich des Profilabschnitts mit dem Windabweiser ein herkömmliches Schiebedach-Dichtungsprofil anzuheizen.

Anhand einer schematischen Zeichnung sind Aufbau und Funktionsweise von Ausführungsbeispielen nach der Erfindung näher erläutert. Dabei zeigen

Fig. 1 eine Aufsicht auf das entlang der Dachöffnungskante verlaufende Profil in geschlossener Schleife mit einem Windabweiserprofil im vorderen Bereich,

Fig. 2 eine Aufsicht auf dieses Profil im extrudierten, glatten Zustand,

Fig. 3 einen Querschnitt durch das Dichtungsprofil im Bereich des Windabweisers entsprechend der Schnittlinie III-III nach Fig. 2 im Zustand nach der Extrusion,

Fig. 4 einen Querschnitt durch dieses Profil im geschlossenen Zustand bei zugeschobenem Schiebedach,

Fig. 5 einen Querschnitt durch das Dichtungsprofil im seitlichen und hinteren Dichtungsbereich entsprechend der Schnittlinie V-V nach Fig. 2,

Fig. 6 einen Querschnitt durch das Profil mit Windabweiser mit einem Federstahlbügel zum Aufklappen,

Fig. 7 einen Querschnitt durch das Profil nach Fig. 6 im geschlossenen Zustand,

Fig. 8 einen Querschnitt durch den Dichtungsprofilabschnitt mit einer Arretierung über doppelseitiges Klebeband,

Fig. 9 einen Teilquerschnitt durch das Dichtungsprofil mit einer Arretierung durch eine Rastnase,

Fig. 10 einen Querschnitt durch das Dichtungsprofil mit pneumatischer Unterstützung der Bewegung des Windabweiserprofils und

Fig. 11 einen Querschnitt durch den Windabweiser mit angeheizter Dichtungsnase und eingefärbter Formmischung auf der Oberseite.

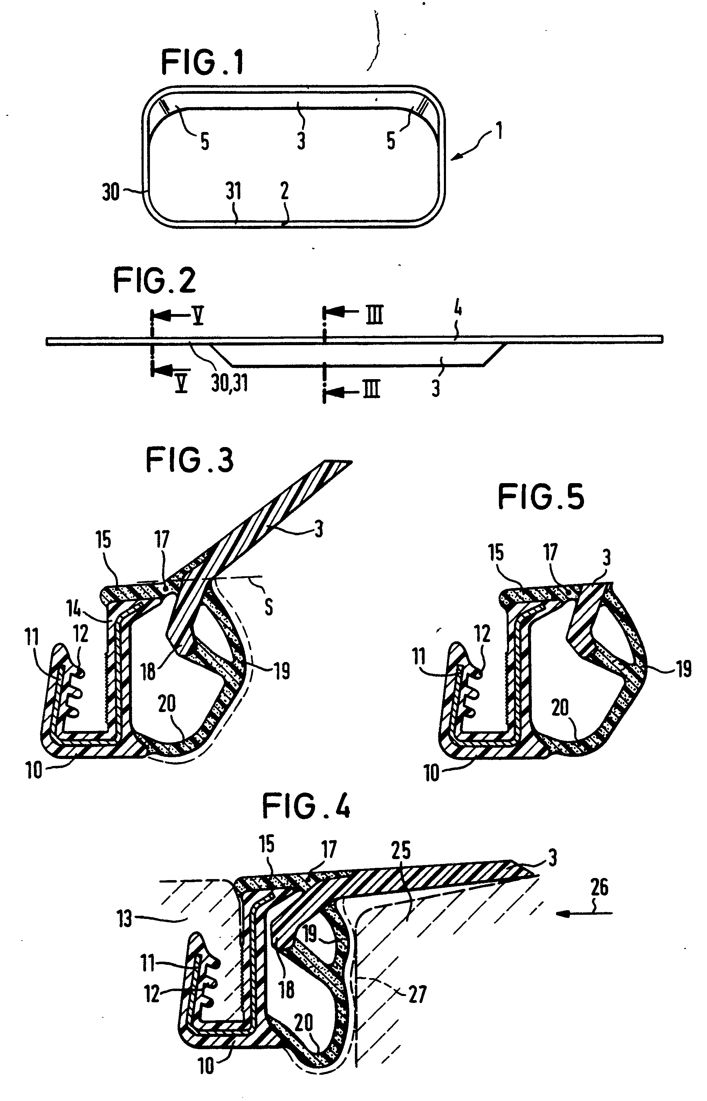

Wie man aus Fig. 1 ersieht, die einen Blick von oben quasi auf die Dachöffnung zeigt, ist ein die Dachöffnungsinnenkante einstückig umziehendes Dichtungsprofil 1 vorgesehen, das nur eine einzige Stoßkante 2 und im vorderen Bereich einen integralen Windabweiser 3 aufweist.

Wie aus der gestreckten Darstellung nach Fig. 2 ersichtlich ist, die den extrudierten Zustand zeigt, weist das Profil 1 einen durchgehenden Dichtungsbereich 4 und im mittleren Bereich den anextrudierten Windabweiser 3 mit den schrägen Auslaufkanten 5 auf. Zum besseren Verständnis ist in Fig. 3 ein Querschnitt durch das Dichtungsprofil mit Windabweiser entsprechend der Schnittlinie III-III nach Fig. 2 dargestellt.

Danach weist das Profil zunächst einen U-förmigen, nach oben offenen Klemmbereich 10 mit einer innenliegenden Metallarmierung 11 und innenliegenden Klemmlippen 12 zur Festlegung an der Dachinnenkante 13 (siehe Fig. 4) auf. Am innenliegenden Schenkel 14 des Klemmprofils 10, der etwas länger als der außenliegende ausgebildet sein kann, ist über einen horizontal liegenden Zwischenabschnitt 15 aus weichelastischem Material das eigentliche schräg nach oben weisende Windabweiserprofil 3 als praktisch ebene Platte anextrudiert, dessen innenliegendes Ende 18 über den Schwenkpunkt 17 hinaus nach unten verlängert ist und dabei in einem Winkel von etwas 30° zum eigentlichen Windabweiserprofil 3 verläuft. Auf der innenliegenden Seite dieses Ansatzes 18 ist dann ein praktisch schlauchförmiger Profilbereich 19 aus weicherem Material anextrudiert, von dessen innenliegendem Bereich ein weiterer bogenförmiger Profilabschnitt 20 aus weicherem Material zum Fuß des Klemmprofils 10 zurückgeführt ist und damit den Spalt zwischen Schlauchprofil 19 und Klemmprofil 10 überbrückt. Bei den einzelnen Profilbereichen ist dabei das Klemmprofil 10 und das Windabweiserprofil 3 mit dem Ansatz 18 aus einem härteren Material mit einer Shore-A-Härte von etwa 90 und die weicheren Bereiche, wie der Zwischenabschnitt 15, das Schlauchprofil 19 und der bogenförmige Profilabschnitt 20 aus einem Material mit einer Shore-A-Härte von etwa 45 bis 55 gefertigt.

Die Funktion dieses Profils sei anhand des Querschnittes nach Fig. 4 bei geschlossenem Schiebedach näher erläutert. Der Klemmprofilbereich 10 wird dabei auf eine nach innen ragende Kante 13 des Dachausschnittes von unten aufgeklemmt und dort über die Klemmlippen 12 gehalten. Bei einem Zuschieben des Schiebedachs 25 in Pfeilrichtung 26 drückt die Vorderkante 27 des Schiebedachs 25 gegen den schlauchförmigen Profilbereich 19 und schwenkt damit über die Hebelwirkung des Ansatzes 18 das eigentliche Windabweiserprofil 3 um den Drehpunkt 17 des weichelastischen Zwischenabschnittes 15 nach innen, bis das Windabweiserprofil 3 auf dem Schiebedach 25 aufliegt. Beim Wiederaufschieben des Schiebedachs 25 wird dann durch die elastische Wirkung des bogenförmigen Profilabschnittes 20 entsprechend Fig. 3 das Windabweiserprofil 3 wieder nach oben gedrückt und aufgestellt, bis es seine Endstellung erreicht.

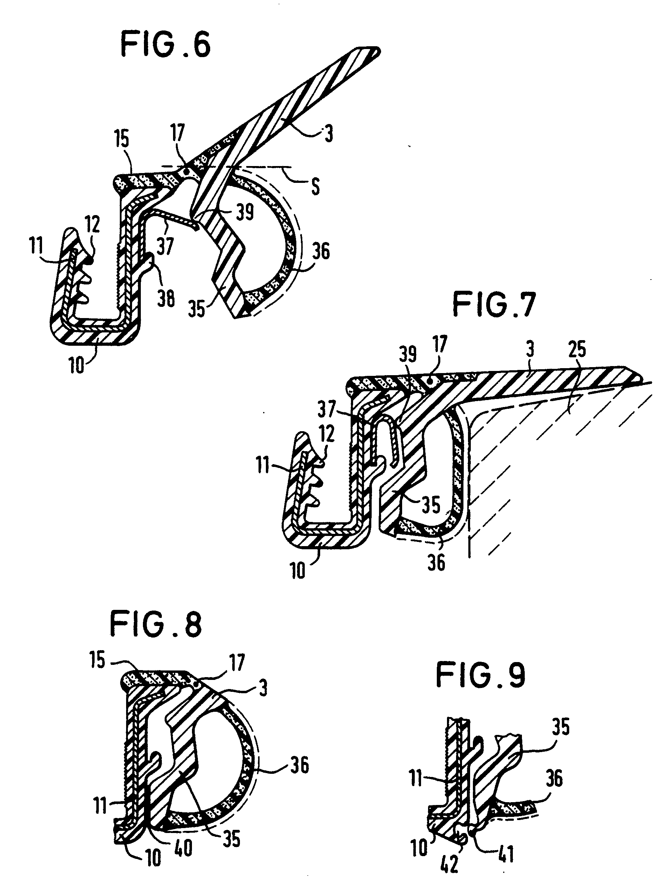

Das Profil kann nunmehr über die gesamte Länge zunächst mit einem Querschnitt entsprechend Fig. 3 extrudiert werden. Für die seitlichen Bereiche 30 und den rückwärtigen Abschnitt 31 der Dachöffnung, entsprechend Fig. 1 und 2, für die nur noch ein reines Dichtungsprofil ohne Windabweiser erforderlich ist, kann dann von dem Profil entsprechend dem Querschnitt nach Fig. 3 der eigentliche Windabweiser 3 entlang der Schnittlinie S abgeschnitten werden, so daß dann nur noch ein reines Dichtungsprofil entsprechend dem Querschnitt nach Fig. 5 übrigbleibt. Der Rückschnitt des Windabweiserprofils 3 erfolgt dabei nicht mit einem vertikalem Schnitt, sondern entlang einer schräg verlaufenden Schnittkante 5 entsprechend Fig. 2, so daß sich damit ein stetiger Übergang ergibt, wie aus der Aufsicht nach Fig. 1 ersichtlich ist. Wie man dazu aus Fig. 5 ersieht, wird dann beim Zufahren des Schiebedaches das schlauchförmige Dichtungsprofil 19 durch die abgerundeten Vorderkanten des Schiebedachs in gleicher Weise nach innen zum Klemmprofil 10 hin angepreßt, so daß sich eine gute Dichtwirkung ergibt.

Bei den Ausführungsbeispielen nach Fig. 3 und 4 erfolgt die Aufstellung des Windabweiserprofils 3 durch den bogenförmigen Profilabschnitt 20. Eine andere Möglichkeit der Aufstellung ist in den Fig. 6 und 7 gezeigt. Dabei ist zunächst der innenliegende Ansatz 35 des Windabweiserprofils 3 weiter nach unter verlängert und auf seiner zum Schiebedach liegenden Seite von einem bogenförmigen Profilabschnitt 36 aus weicherem Material überbrückt. Zwischen dem Klemmprofil 10 und dem Ansatz 35 ist nunmehr ein nach unten offener, V-förmiger Federstahlbügel 37 eingeknöpft, der mit einem Schenkel hinter einem Ansatz 38 des Klemmprofils 10 eingeklemmt ist und mit seinem anderen Schenkel gegen eine Schulter 39 des Ansatzes 35 drückt. Durch die Federwirkung dieses Bügels 37 wird dann das Windabweiserprofil 3 aufgestellt. Beim Schließen des Schiebedachs 25 entsprechend Fig. 7 wird dann bei Druck auf den Profilabschnitt 36 der Ansatz 35 nach innen geschwenkt und der Bügel 37 entsprechend zusammengepreßt, so daß auch hier eine sichere Schließstellung gewährleistet ist.

Für den reinen Dichtbereich 30 und 31 wird auch hier entsprechend der Schnittkante S das Windabweiserprofil 3 zurückgeschnitten, so daß sich ein Dichtprofil entsprechend Fig. 8 ergibt. Da hierbei aber der weichere Profilbereich 36 mit dem Ansatz 35 nur noch über den Zwischenabschnitt 15 mit dem Klemmprofil 10 verbunden ist, ist eine zusätzliche Festlegung erforderlich. Dies kann, wie aus Fig. 8 ersichtlich ist, dadurch erfolgen, daß der Ansatz 35 über eine Klebeverbindung 40 oder ein doppelseitiges Klebeband seitlich am Klemmprofil 10 festgelegt wird.

Eine weitere Möglichkeit der Arretierung ist in Fig. 9 dargestellt. Dazu weist das untere Ende des Ansatzes 35 einen noppenförmigen Ansatz 41 auf, der in eine entsprechende Nut 42 im Fuß des Klemmprofils 10 eingeknöpft werden kann.

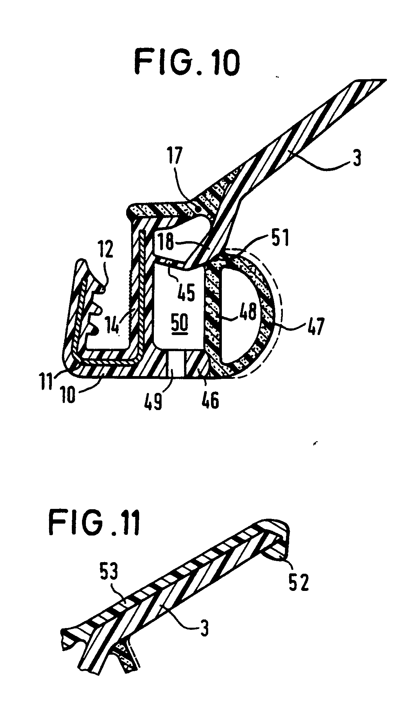

In Fig. 10 ist die Möglichkeit einer pneumatischen Unterstützung der Bewegung des Windabweiserprofils 3 dargestellt. Dazu ist das innenliegende Ende 18 des Windabweiserprofils 3 über einen flexiblen, aber dehnfesten Steg 45 mit dem innenliegenden Schenkel 14 des Klemmprofils 10 verbunden. Ferner weist der Fuß des Klemmprofils 10 einen seitlichen Ansatz 46 aus härterem Material auf, zwischen dessen Kante und der Unterseite des Windabweiserendes 18 ein angenähert schlauchförmiger Profilabschnitt 47, 48 aus weicherem Material einvulkanisiert ist. Die somit gebildete und allseitig abgeschlossene Kammer 50 ist jetzt über eine Bohrung 49 in dem Klemmprofilansatz 46 an eine nicht näher dargestellte Druckluft- bzw. Vakuumquelle angeschlossen.

Bei Anlegen eines Vakuums wird sich dann die Profilwandung 48 nach innen in die Kammer 50 hineinwölben, dadurch verkürzen und das Ende 18 des Windabweiserprofils 3 unter einem Schwenk um den Anlenkpunkt 51 und Hochklappen des Steges 45 nach innen ziehen und damit das Windabweiserprofil 3 nach unten auf das Schiebedach schwenken.

Bei Beaufschlagung der Kammer 50 mit Druckluft wird stattdessen die Profilwandung 48 nach rechts gedrückt, d.h. wieder aufgestellt und damit das Windabweiserprofil 3 wieder nach oben geschwenkt.

Die außenliegende Profilwandung 47 dient dann praktisch nur noch zur Abdichtung gegenüber der Schiebedachvorderkante. Gegebenenfalls kann aber auch die Profilwandung 48 ganz wegfallen, so daß dann die Wandung 47 von Druckluft oder Vakuum beaufschlagt wird und ein Kippen des Windabweiserprofils 3 bewirkt.

Als Pneumatikquelle kann dabei die for eine Zentralverriegelung vorhandene mitbenutzt werden.

Zur besseren Abdichtung gegen das geschlossene Schiebedach ist es darüber hinaus noch zweckmäßig, das Windabweiserprofil 3 mit einer Dichtnase 52 aus weicherem Material zu versehen, wie das in Fig. 10 gezeigt ist. Diese Dichtnase 52 kann nachträglich in einer Form angeheizt oder unmittelbar mit anextrudiert werden. Darüber hinaus ist es zweckmäßig, was in der Zeichnung jedoch nicht im einzelnen dargestellt ist, auch die schräg zurückgeschnittenen Bereiche 5 seitlich mit entsprechenden Dichtnasen zu versehen, um auch am Rande des Windabweiserprofils eine gute Dichtwirkung zu erreichen.

Aus optischen Gründen kann dann noch die Oberseite des Windabweiserprofils 3 mit einer eingefärbten Formmischung 53 abgedeckt werden, um damit eine bessere farbliche Abstimmung zu erreichen.

Mit der beschriebenen Gestaltung und Ausbildung des Dichtungsprofils ist es also möglich, auf einfache Weise ein umlaufendes, einstückiges Profil mit einem anextrudierten Windabweiser im vorderen Beeich zu erhalten, der neben einer einfachen und sicheren Funktion ohne zusätzliche Teile auch sehr einfach zu montieren ist. Dabei kann der Übergang des Profilbereichs vom integrierten Windabweiser zum reinen Dichtungsprofil entweder - wie zu den Figuren bechrieben - durch Rückschneiden erfolgen, oder aber auch mittels einer variablen Extrusion, d.h. der Extrusionsspalt des Extruders wird während der Extrusion entsprechend variiert. Gegebenenfalls können aber auch die reinen Dichtungsabschnitte mittels herkömmlicher Dichtungsprofile an den Abschnitt des Dichtungsprofils mit integralem Windabweiser in herkömmlicher Weise geheizt werden, was jedoch auch eine erhebliche Vereinfachung gegenüber den bisher gekannten Windabweiseranordnungen ergibt.

## Ansprüche

1. Dichtungsprofil mit Windabweiser für das Schiebedach eines Kraftfahrzeuges, bei dem die Dichtung die das Schiebedach umgebende Dachöffnungskante allseitig umzieht, dadurch gekennzeichnet, daß das Dichtungsprofil (1) über den gesamten Umfang einstückig ausgebildet ist und im Bereich der vorderen Dachöffnungskante einen anextrudierten, sich bei Öffnen des Schiebedaches (25) aufstellenden Windabweiser (3) aufweist.

2. Dichtungsprofil nach Anspruch 1, dadurch gekennzeichnet, daß es ein U-förmiges, nach oben offenes Klemmprofil (10) aus härterem Material aufweist, an dessen einem Schenkelende (14) über einen weichelastischen, flexiblen Zwischenabschnitt (15) das aus härterem Material bestehende, ebene und schräg nach oben abragende Windabweiserprofil (3) angeschlossen ist, dessen innenliegendes Ende (18) über die Anschlußstelle (17) des flexiblen Zwischenabschnittes (15) hinaus nach unten verlängert ist und auf seiner freien Innenseite einen schlauchförmigen Profilaufsatz (19) aus weicherem Material als Dicht- und Anschlagfläche gegen die vordere Schiebedachkante (27) derart aufweist, daß bei Schließen des Schiebedaches (25) das abragende Windabweiserprofil (3) um die Anschlußstelle (17) des Zwischenabschnittes (15) als Drehpunkt verschwenkt und nach unten geklappt ist.

3. Dichtungsprofil nach Anspruch 2, dadurch gekennzeichnet, daß sich das Windabweiserprofil (3) durch mechanisch-elastische Hilfsmittel (20; 37) aufstellt.

4. Dichtungsprofil nach Anspruch 3, dadurch gekennzeichnet, daß zwischen Außenkante des Schlauchprofils (19) und dem Fußbereich des Klemmprofils (10) ein weiterer, bogenförmiger Profilabschnitt (20) aus weicherem Material verläuft.

5. Dichtungsprofil nach Anspruch 3, dadurch gekennzeichnet, daß zwischen dem innenliegenden Ende (35) des Windabweiserprofils (3) und dem benachbarten Schenkel des Klemmprofils (10) ein U-förmiges, nach unten offenes Federstahlband (37) eingeknöpft ist.

6. Dichtungsprofil nach Anspruch 2, dadurch gekennzeichnet, daß sich das Windabweiserprofil (3) durch pneumatische Unterstützung aufstellt.

7. Dichtungsprofil nach Anspruch 6, dadurch gekennzeichnet, daß das innenliegende Ende (18) des Windabweiserprofils (3) über einen flexiblen Steg (45) mit dem innenliegenden Schenkel (14) des Klemmprofils (10) verbunden ist, daß zwischen der Unterseite des innenliegenden Endes (18) und einem seitlichen Ansatz (46) des Fußes des Klemmprofils (10) ein angenähert schlauchförmiger, weichelastischer Profilabschnitt (47, 48) einvulkanisiert ist und die so gebildete Kammer (50) über eine Bohrung (49) in dem Ansatz (46) an eine pneumatische Druck- und Saugquelle angeschlossen ist.

8. Dichtungsprofil nach Anspruch 2 bis 7, dadurch gekennzeichnet, daß das innenliegende Ende (18, 35) des Windabweiserprofils (3) gegenüber dem freiabragenden Pro filbereich unter einem Winkel von etwa 30° abgeknickt ist.

9. Dichtungsprofil nach Anspruch 2, dadurch gekennzeichnet, daß im seitlichen und hinteren Bereich (30, 31) der Dachöffnungskante das abragende Windabweiserprofil (3) bis auf den Bereich des Drehpunktes (17) zurückgeschnitten ist.

10. Dichtungsprofil nach Anspruch 9, dadurch gekennzeichnet, daß die seitliche Kante (5) des zurückgeschnittenen Windabweiserprofilbereichs (3) schräg im Winkel zur Profillängsachse verläuft.

11. Dichtungsprofil nach Anspruch 9, dadurch gekennzeichnet, daß im seitlichen und hinteren Dichtbereich (30, 31) das innenliegende Ende (35) des Windabweiserprofils (3) an dem benachbarten Schenkel des Klemmprofils (10) anliegt und starr mit diesem verbunden ist.

12. Dichtungsprofil nach Anspruch 11, dadurch gekennzeichnet, daß die Verbindung über ein doppelseitiges Klebeband (40) erfolgt.

13. Dichtungsprofil nach Anspruch 11, dadurch gekennzeichnet, daß die Verbindung mittels eines in eine seitliche, nutförmige Ausnehmung (42) des Klemmprofilfußes (10) einknöpfbaren Ansatzes (41) im innenliegenden Windabweiserprofil (35) erfolgt.

14. Dichtungsprofil nach Anspruch 2, dadurch gekennzeichnet, daß an das Windabweiserprofil (3) am vorderen, freien Ende eine nach unten ragende Dichtnase (52) aus weicherem Material angesetzt ist.

15. Dichtungsprofil nach Anspruch 10 und 14, dadurch gekennzeichnet, daß an den schräg zurückgeschnittenen seitlichen Windabweiserkanten (5) Dichtungsnasen angeheizt sind.

16. Dichtungsprofil nach Anspruch 2, dadurch gekennzeichnet, daß die Oberseite des Windabweiserprofils (3) mit einer eingefärbten Formmischung (53) überdeckt ist.

17. Dichtungsprofil nach einem oder mehreren der Ansprüche 1 bis 16, dadurch gekennzeichnet, daß die härteren Materialbereiche (3; 10) eine Shore-A-Härte von etwa 90 und die weicheren Materialbereiche (15; 19; 20; 36; 47, 48; 52) eine Shore-A-Härte von etwa 45 bis 55 aufweisen.

18. Dichtungsprofil nach einem der Ansprüche 2 bis 5, dadurch gekennzeichnet, daß seitlich an den Bereich des Profilabschnittes mit einem Windabweiser ein herkömmliches Schiebedach-Dichtungsprofil angeheizt ist.

FIG.1

FIG.2

FIG.3

FIG.5

FIG.4

FIG.6

FIG.7

FIG.8

FIG.9

# FIG. 10

# FIG. 11

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| | **EINSCHLÄGIGE DOKUMENTE** | | EP 90103171.6 |
| X | DE - A1 - 3 621 773 (BAYERISCHE MOTOREN WERKE AG) * Gesamt * -- | 1,2,3, 14,18 | B 60 J 10/12 B 60 J 7/22 |
| A | DE - A1 - 3 146 908 (ROCKWELL GOLDE GMBH) * Fig. 1,2 * -- | 1 | |
| A | DE - A1 - 3 729 181 (WEBASTO AG FAHRZEUGTECHNIK) * Gesamt * ---- | 1,7 | |

| RECHERCHIERTE SACHGEBIETE (Int. Cl.⁵) |
|---|
| B 60 J B 60 R |

Der vorliegende Recherchenbericht wurde für alle Patentansprüche erstellt.

| Recherchenort | Abschlußdatum der Recherche | Prüfer |
|---|---|---|
| WIEN | 08-05-1990 | SCHMICKL |